(19) Europäisches Patentamt / European Patent Office / Office européen des brevets

(11) **EP 4 525 436 A1**

(12) **EUROPEAN PATENT APPLICATION**
published in accordance with Art. 153(4) EPC

(43) Date of publication:
**19.03.2025 Bulletin 2025/12**

(21) Application number: **23803863.2**

(22) Date of filing: **11.05.2023**

(51) International Patent Classification (IPC):
**H04N 13/271** (2018.01)    **H04N 13/254** (2018.01)
**H04N 13/236** (2018.01)    **H04N 13/207** (2018.01)
**H04N 23/54** (2023.01)    **H04N 23/55** (2023.01)
**G02B 27/28** (2006.01)    **G02B 26/08** (2006.01)

(52) Cooperative Patent Classification (CPC):
**G02B 26/08; G02B 27/28; H04N 13/207;
H04N 13/236; H04N 13/254; H04N 13/271;
H04N 23/54; H04N 23/55**

(86) International application number:
**PCT/KR2023/006413**

(87) International publication number:
**WO 2023/219440 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022 KR 20220057740**
**17.05.2022 KR 20220060296**

(71) Applicant: **LG INNOTEK CO. LTD**
**Gangseo-gu**
**Seoul 07796 (KR)**

(72) Inventors:
• **LEE, Hyeon Yong**
  **Seoul 07796 (KR)**
• **PARK, Ho Jin**
  **Seoul 07796 (KR)**

(74) Representative: **DREISS Patentanwälte PartG
mbB
Friedrichstraße 6
70174 Stuttgart (DE)**

(54) **CAMERA APPARATUS**

(57)    A camera apparatus according to an embodiment of the present invention comprises: an optical output unit which generates and emits an output light signal to an object; an optical input unit which receives an input light signal input after being reflected from the object; and a depth information generation unit which generates depth information of the object using the input light signal input to the optical input unit. The optical output unit comprises: a light source which generates the output light signal; and a beam splitter which splits the output light signal generated by the light source into a first polarization component and a second polarization component that are different from each other, wherein the first polarization component and the second polarization component are emitted to be distinguished from each other on the object.

FIG. 4

EP 4 525 436 A1

**Description**

**[Technical Field]**

The present invention relates to a camera apparatus.

**[Background Art]**

There-dimensional contents are applied in many fields such as games, culture, education, manufacturing, and autonomous driving, and depth map is required to acquire the three-dimensional contents. The depth map is information representing a distance in space and represents perspective information of another point with respect to one point of a two-dimensional image. As a method of acquiring the depth map, a method of projecting infrared (IR) structured light onto an object, a method using a stereo camera, a time of flight (TOF) method, or the like is used.

To acquire the depth map, an optical output unit of a camera apparatus generates and emits an output light signal on an object, an optical input unit of the camera apparatus receives an input light signal reflected from the object, and a depth map generation unit of the camera apparatus generates depth map of the object using the input light signal input to the optical input unit.

At this time, the optical output unit may emit an output light signal of a point-light pattern on the object. Here, the point-light pattern may be a spot array shape spaced a predetermined distance in a predetermined area. As the number of spots per unit area increases, the measurement resolution may be increased, but as a distance between the spots decreases, interference between the spots may occur, thereby lowering the precision of the generated depth map.

**[Disclosure]**

**[Technical Problem]**

The present invention is directed to providing a camera apparatus capable of extracting a depth map with high precision and resolution.

**[Technical Solution]**

A camera apparatus according to an embodiment of the present invention includes an optical output unit configured to generate and emit an output light signal to an object, an optical input unit configured to receive an input light signal input after being reflected from the object, and a depth map generation unit configured to generate a depth map of the object using the input light signal input to the optical input unit, wherein the optical output unit includes a light source configured to generate the output light signal, and a beam splitter configured to split the output light signal generated by the light source into a first polarization component and a second polarization component that differ from each other, and the first polarization component and the second polarization component are emitted to be distinguished from each other on the object.

The optical output unit may include a first phase retardation member configured to phase-retard the first polarization component, and a second phase retardation member configured to phase-retard the second polarization component, and the first polarization component phase-retarded by the first phase retardation member and the second polarization component phase-retarded by the second phase retardation member may be emitted to be distinguished from each other on the object.

One of the first polarization component and the second polarization component may be a P-polarized component, the other may be an S-polarized component, the first polarization component may be circularly polarized in a first direction by the first phase retardation member, and the second polarization component may be circularly polarized in a second direction differing from the first direction by the second phase retardation member.

The first phase retardation member and the second phase retardation member may phase-retard the first polarization component and the second polarization component at 90 degrees, respectively.

The first polarization component may be emitted on the object in the form of a first spot array, the second polarization component may be emitted on the object in the form of a second spot array, and the first spot array may be disposed to be spaced apart from the second spot array between the first spot array and the second spot array.

The first polarization component and the second polarization component may be simultaneously emitted on the object.

At least one of the first polarization component and the second polarization component split by the beam splitter may be reflected by a mirror and then emitted on the object.

The camera apparatus may further include a first optical element disposed on a path on which the first polarization component is emitted, and a second optical element disposed on a path on which the second polarization component is emitted to diffuse the second polarization component, wherein at least one of the first optical element and the second optical element may be a diffractive optical element (DOE).

The optical input unit may receive the first polarization component input after being reflected from the object during a first time period and receives the second polarization component input after being reflected from the object during a second time period not overlapping the first time period, and the depth map generation unit may generate the depth map of the object using the first polarization component and the second polarization component.

The depth map generation unit may generate the depth map using at least one of a phase difference or time difference between the output light signal and the input light signal.

The output light signal may be structured light having a predetermined pattern, and the depth map generation unit may generate the depth map using disparity of the structured light.

A camera apparatus according to another embodiment of the present invention includes an optical output unit configured to emit a light signal having a predetermined pattern formed of a plurality of points on an object, an optical input unit configured to receive a light signal reflected from the object, and a depth map generation unit configured to generate a depth map of the object using disparity of the light signal received by the optical input unit, wherein the optical output unit includes a first optical system configured to emit a light signal of a first field of illumination on the object, and a second optical system configured to emit the light signal of a second filed of illumination smaller than the first field of illumination on the object, the optical input unit includes a zoom optical system driven at one of a first magnification and a second magnification higher than the first magnification, and an image sensor, the zoom optical system is driven when the first optical system is driven, and the zoom optical system is driven at the second magnification when the second optical system is driven.

The camera apparatus may further include a control unit configured to control the optical input unit and the depth map generation unit, wherein the first optical system may include a first light source, a first diffractive optical element (DOE) configured to diffuse light output by the first light source at a first field of illumination, and the second optical system may include a second light source and a second DOE configured to diffuse light output by the second light source at a second field of illumination.

When the first light source is turned on, the control unit may control the zoom optical system to be driven at the first magnification, and when the second light source is turned on, the control unit may control the zoom optical system to be driven at the second magnification.

The first light source and the second light source may output light having the same pattern, the light output by the first light source may be radiated n*n times by the first DOE and emitted on the object, the light output by the second light source may be radiated n*n times by the second DOE and emitted on the object, and n may be an integer of 2 or more.

The zoom optical system may include a zoom lens and an actuator configured to drive the zoom lens at one of the first magnification and the second magnification.

The camera apparatus may further includes a control unit configured to control the optical output unit, the optical input unit, and the depth map generation unit, and the control unit may control one of the first optical system and the second optical system to be selectively driven.

The optical output unit may emit the light signal of the first field of illumination when the generated depth map is a preset distance or less and emit the light signal of the second field of illumination when the generated depth map exceeds the preset distance.

A method of generating a depth map of a camera apparatus according to still another embodiment of the present invention includes emitting a light signal having a predetermined pattern formed of a plurality of points on an object, linking the optical output unit with an optical input unit, receiving, by the optical input unit, a light signal reflected from the object, and generating a depth map of the object using disparity of the light signal received by the optical input unit, wherein the emitting of the light signal includes emitting, by the optical output unit, one of the light signal of a first field of illumination and the light signal of a second field of illumination smaller than the first field of illumination, and the linking of the optical output unit with the optical input unit includes driving a zoom lens of the optical input unit at a first magnification when the optical output unit emits the light signal of the first field of illumination on the object and driving the zoom lens of the optical input unit at a second magnification higher than the first magnification when the optical output unit emits the light signal of a second field of illumination on the object.

The emitting of the light signal on the object may include selectively emitting, by the optical output unit, the light signal of the first field of illumination on the object or emitting the light signal of the second field of illumination on the object according to the generated depth map.

The emitting of the light signal on the object may include emitting, by the optical output unit, the light signal of the first field of illumination on the object when the generated depth map is a preset distance or less and emitting, by the optical output unit, the light signal of the second field of illumination on the object when the generated depth map exceeds the preset distance.

**[Advantageous Effects]**

According to the embodiments of the present invention, it is possible to arrange the maximum number of spots per unit area, thereby extracting the depth map with high resolution. In addition, according to the embodiments of the present invention, it is possible to arrange the maximum number of spots per unit area and minimize interference between the spots, thereby extracting the depth map with high precision. According to the embodiments of the present invention, it is possible to obtain the camera apparatus applicable to extracting the depth map at long and short distances. According to the embodiments of the present invention, since the high-resolution image sensor is not used, it is possible to reduce the total of power consumption and calculations of the camera apparatus.

**[Description of Drawings]**

FIG. 1 is a block diagram of a camera apparatus according to an embodiment of the present invention.
FIG. 2 is a schematic cross-sectional view of the camera apparatus according to an embodiment of the present invention.
FIG. 3 is a view for describing an output light signal output by the camera apparatus according to the embodiment of the present invention.
FIG. 4 shows an optical output unit included in the camera apparatus according to the embodiment of the present invention.
FIG. 5 shows a spot image on a target surface emitted by the optical output unit according to the embodiment of the present invention.
FIG. 6 shows the optical output unit included in the camera apparatus according to the embodiment of the present invention.
FIG. 7 shows the optical output unit included in the camera apparatus according to the embodiment of the present invention.
FIG. 8 shows the principle of a phase retardation member according to the embodiment of the present invention.
FIG. 9 describes an operation of an optical input unit of the camera apparatus according to the embodiment of the present invention.
FIG. 10 is a graph for describing an effect according to the embodiment of the present invention.
FIG. 11 is an example of a light signal having a predetermined pattern.
FIG. 12 is a view for describing the principle of generating depth map using structured light.
FIG. 13 is a graph for describing a change in disparity according to a distance difference between a reference distance and an object.
FIG. 14 shows disparity measurement performance according to the number of pixels of an image sensor.
FIG. 15 is a block diagram of the camera apparatus according to the embodiment of the present invention.
FIG. 16 is a conceptual diagram of the camera apparatus according to the embodiment of the present invention.
FIG. 17 is a block diagram of a zoom optical system according to the embodiment of the present invention.
FIG. 18 is a flowchart showing a method of generating a depth map of a camera apparatus according to an embodiment of the present invention.
FIG. 19 is a flowchart showing an operation of linking, by a control unit, an optical output unit and an optical input unit in the method of generating the depth map of FIG. 18.
FIG. 20 is a flowchart showing a control method of a camera apparatus according to an embodiment of the present invention.
FIG. 21 shows an example of improved disparity measurement performance when an optical input unit includes a zoom lens according to the embodiment of the present invention.

**[Mode for Invention]**

Hereinafter, exemplary embodiments according to the present invention will be described in detail with reference to the accompanying drawings.
However, the technical spirit of the present invention is not limited to some of the described embodiments, but may be implemented in various different forms, and one or more of the components among the embodiments may be used by being selectively coupled or substituted without departing from the scope of the technical spirit of the present invention.
In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

A camera apparatus according to an embodiment of the present invention may be a camera for extracting a depth map using a time of flight (TOF) function or a structured light method. Therefore, the camera apparatus may be used interchangeably with a depth map extraction apparatus, a three-dimensional information extraction apparatus, or the like, and when the TOF function is used, may be used interchangeably with a TOF camera apparatus, a TOF camera, or the like.

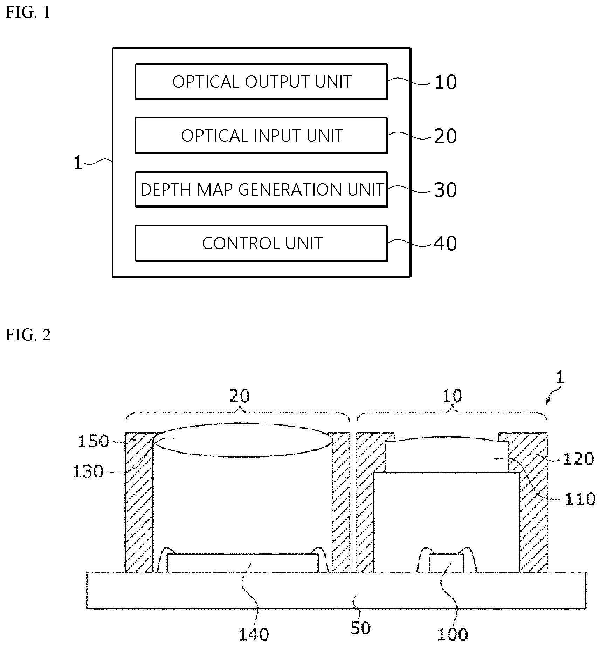

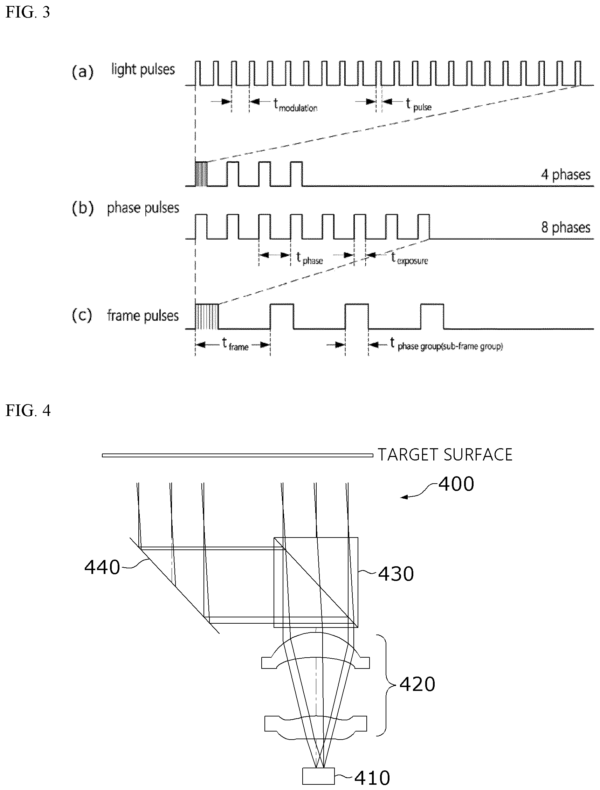

FIG. 1 is a block diagram of a camera apparatus according to an embodiment of the present invention, and FIG. 2 is a schematic cross-sectional view of the camera apparatus according to the embodiment of the present invention. FIG. 3 is a view for describing an output light signal output by the camera apparatus according to the embodiment of the present invention.

Referring to FIGS. 1 and 2, a camera apparatus 1 according to an embodiment of the present invention includes an optical output unit 10, an optical input unit 20, a depth map generation unit 30, and a control unit 40.

The optical output unit 10 generates and then emits an output light signal on an object. At this time, the optical output unit 10 may generate and output the output light signal in the form of a pulse wave or continuous wave. The continuous wave may be in the form of a sinusoid wave or squared wave. By generating the output light signal in the form of a pulse wave or continuous wave, the camera apparatus 1 may detect a time difference or phase difference between the output light signal output from the optical output unit 10 and an input light signal reflected from the object and then input to the optical input unit 20. In the present specification, output light may be light output from the optical output unit 10 and incident on an object, and input light may be light output from the optical output unit 10, reaching the object, then reflected from the object, and input to the optical input unit 20. Based on the object, the output light may be incident light, and the input light may be reflected light.

Referring to FIG. 3A, the optical output unit 10 may generate light pulses at a regular cycle. The optical output unit 10 may generate light pulses having a predetermined pulse width $t_{pulse}$ at a predetermined pulse repetition cycle $t_{modulation}$.

Referring to FIG. 3B, the predetermined number of light pulses generated by the optical output unit 10 may be grouped to generate one phase pulse. The optical output unit 10 may generate phase pulses having a predetermined phase pulse cycle $t_{phase}$ and a predetermined phase pulse width $t_{exposure}$. The phase pulse width may be referred to as $t_{illumination}$ or $t_{integration}$. Here, one phase pulse cycle $t_{phase}$ may correspond to one subframe. The subframe may be referred to as a phase frame. The predetermined number of phase pulse cycles may be grouped. A method of grouping four phase pulse cycles $t_{phase}$ may be referred to as a 4-phase method. A method of grouping eight cycles $t_{phase}$ may be referred to as an 8-phase method.

Referring to FIG. 3C, the predetermined number of phase pulses generated by the optical output unit 10 may be grouped to generate one frame pulse. The optical output unit 10 may generate a frame pulse having a predetermined frame pulse cycle $t_{frame}$ and a predetermined frame pulse width $t_{phase}$ group (sub-frame group). Here, one frame pulse cycle $t_{frame}$ may correspond to one frame. Therefore, when an object is captured at 10 FPS, 10 frame pulse cycles $t_{frame}$ may be repeated per second. In the 4-phase method, one frame may include 4 subframes. That is, one frame may be generated through the 4 sub-frames. In the 8-phase method, one frame may include 8 subframes. That is, one frame may be generated through the 8 sub-frames.

In the above description, the terms light pulse, phase pulse, and frame pulse have been used, but the present invention is not limited thereto.

Referring back to FIGS. 1 and 2, the optical output unit 10 may include a light source 100 and a lens assembly 110.

First, the light source 100 generates light. The light generated by the light source 100 may be infrared rays having a wavelength ranging from 770 to 3000 nm or visible light having a wavelength ranging from 380 to 770 nm. The light source 100 may use a light emitting diode (LED) and have a form in which a plurality of light emitting diodes are arranged in a regular pattern. In addition, the light source 100 may include an organic light emitting diode (OLED) or a laser diode (LD). Alternatively, the light source 100 may be a vertical cavity surface emitting laser (VCSEL). The VCSEL is one of laser diodes for converting an electric signal into a light signal and may output a wavelength ranging from about 800 to 1000 nm, for example, a wavelength of about 850 nm or about 940 nm. The light source 100 repeats flashing (on/off) at regular time intervals to generate an output light signal in the form of a pulse wave or continuous wave. The regular time interval may be a frequency of the output light signal.

The lens assembly 110 may collect light output from the light source 100 and output the collected light to the outside. The lens assembly 110 may be disposed to be spaced apart from the light source 100 above the light source 100. Here, "above the light source 100" may be a side at which light is output from the light source 100. The lens assembly 110 may include at least one lens. When the lens assembly 110 includes a plurality of lenses, each lens may be aligned with respect to a central axis to form an optical system. Here, the central axis may be the same as an optical axis of the optical system.

The lens assembly 110 may be accommodated in or supported by a housing 120. According to one embodiment, the housing 120 may be coupled to a driving module (not shown), and the lens assembly 110 may be moved in a direction of the optical axis or a direction perpendicular to the optical axis by the driving module (not shown).

Meanwhile, the optical input unit 20 receives light reflected from the object. To this end, the optical input unit 20 may include a lens assembly 130 for collecting input light reflected from the object, a filter (not shown), and an image sensor 140 for converting the input light passing through the lens assembly 130 into an electric signal, and the lens assembly 130, the filter (not shown), and the image sensor 140 may be accommodated in or supported by a housing 150. The housing 120 at the optical output unit 10 side and the housing 150 at the optical input unit 20 side are shown as being spaced apart from each other, but are not limited thereto, and the housing 120 at the optical output unit 10 side and the housing 150 at the optical input unit 20 side may be an integrated housing.

The optical axis of the lens assembly 130 may be aligned with the optical axis of the image sensor 140. The filter (not shown) may be disposed between the lens assembly 130 and the image sensor 140 to filter light having a predetermined wavelength range. For example, the filter (not shown) may pass light in a wavelength band of the output light output by the optical output unit 10.

The image sensor 140 may receive an input light signal in synchronization with a flashing cycle of the light source 100. Specifically, the image sensor 140 may receive light in phase and out phase with the output light signal output from the light source 100. That is, the image sensor 140 may repeatedly perform an operation of receiving the input light signal when the light source is turned on and an operation of receiving the input light signal when the light source is turned off. The image sensor 140 may generate an electric signal corresponding to each reference signal using a plurality of reference signals having different phase differences. A frequency of the reference signal may be set to be the same as the frequency of the output light signal output from the light source 100. Therefore, when the light source 100 generates an output light signal with a plurality of frequencies, the image sensor 140 generates an electric signal using a plurality of reference signals corresponding to each frequency. The electric signal may include information about the amount of charge or voltage corresponding to each reference signal.

The number of reference signals according to the embodiment of the present invention may be four ($C_1$ to $C_4$, not shown). Each of the reference signals ($C_1$ to $C_4$) may have the same frequency as the output light signal but have a 90 degree phase difference. One ($C_1$) of the four reference signals may have the same phase as the output light signal. The input light signal is retarded in phase as much as a distance that the output light signal is reflected after being incident on the object. The image sensor 140 mixes the input light signal and each reference signal. Then, the image sensor 140 may generate an electric signal for each reference signal.

The image sensor 140 may have a structure in which a plurality of pixels are arranged in the form of a grid. The image sensor 140 may be a complementary metal oxide semiconductor (CMOS) image sensor or a charge coupled device (CCD) image sensor. In addition, the image sensor 140 may include a TOF sensor for receiving IR light reflected from an object and measuring a distance using a time or phase difference. For example, each pixel may include an in phase receiving unit for receiving an input light signal in the same phase as the waveform of the output light, and an out phase receiving unit for receiving an input light signal in a phase opposite to that of the waveform of the output light. When the in phase receiving unit and the out phase receiving unit are activated with a time difference, a difference occurs in the amount of light received by the in phase receiving unit and the out phase receiving unit depending on a distance to the object, and the distance to the object may be calculated using the above difference.

The optical input unit 20 may be disposed parallel to the optical output unit 10. The optical input unit 20 may be disposed next to the optical output unit 10. The optical input unit 20 may be disposed in the same direction as the optical output unit 10.

The depth map generation unit 30 may generate depth map of the object using the input light signal input to the optical input unit 20. For example, the depth map generation unit 30 may calculate the depth map of the object using a flight time required for the output light signal output from the optical output unit 10 to be reflected from the object and then input to the optical input unit 20. For example, the depth map generation unit 30 calculates a phase difference between the output light signal and the input light signal using the electric signal received from the image sensor 140 and calculates a distance between the object and the camera apparatus 1 using the calculated phase difference.

Specifically, the depth map generation unit 30 may calculate the phase difference between the output light signal and the input light signal using charge amount information of the electric signal.

As discussed above, four electric signals may be generated for each frequency of the output light signal. Therefore, the depth map generation unit 30 may calculate a phase difference $t_d$ between the output light signal and the input light signal using Equation 1 below.

[Equation 1]

$$t_d = \arctan\left(\frac{Q_3 - Q_4}{Q_1 - Q_2}\right)$$

Here, $Q_1$ to $Q_4$ denote the charge amounts of four electric signals. $Q_1$ denotes the charge amount of the electric signal corresponding to the reference signal having the same phase as the output light signal. $Q_2$ denotes the charge amount of the electric signal corresponding to the reference signal having a phase 180 degrees slower than the output light signal. $Q_3$ denotes the charge amount of the electric signal corresponding to the reference signal having a phase 90 degrees slower than the output light signal. $Q_4$ denotes the charge amount of the electric signal corresponding to the reference signal having a phase 270 degrees slower than the output light signal.

Then, the depth map generation unit 30 may calculate the distance between the object and the camera apparatus 1 using the phase difference between the output light signal and the input light signal. At this time, the depth map generation unit 30 may calculate a distance d between the object and the camera apparatus 1 using Equation 2 below.

[Equation 2]

$$d = \frac{c}{2f}\frac{t_d}{2\pi}$$

Here, c denotes a speed of light, and f denotes a frequency of the output light.

The control unit 40 controls the operations of the optical output unit 10, the optical input unit 20, and the depth map generation unit 30. The depth map generation unit 30 and the control unit 40 may be implemented in the form of a printed circuit board (PCB) 50. In addition, the depth map generation unit 30 and the control unit 40 may be implemented in the form of different configurations. Alternatively, the control unit 40 may be included in a terminal in which the camera apparatus 1 according to the embodiment of the present invention is disposed. For example, the control unit 40 may be implemented in the form of an application processor (AP) of a smartphone provided with the camera apparatus 1 according to the embodiment of the present invention.

According to the embodiment of the present invention, the optical output unit outputs an output light signal having a split polarization component, thereby maximizing the number of spots per unit area emitted on an object, that is, a target surface and minimizing interference between the spots.

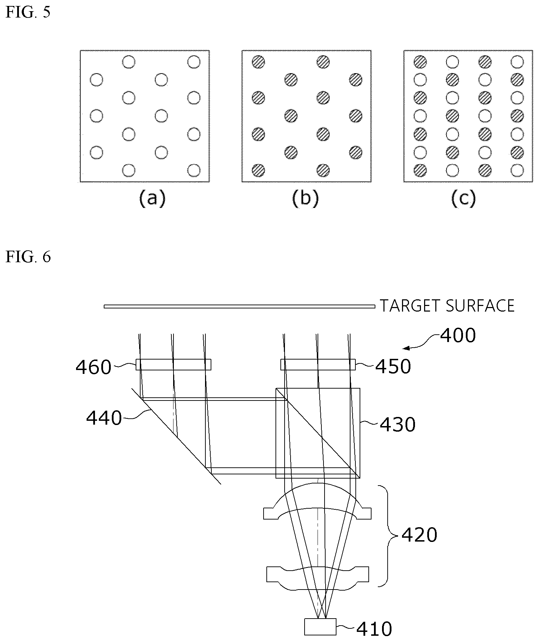

FIG. 4 shows an optical output unit included in the camera apparatus according to the embodiment of the present invention, and FIG. 5 shows a spot image on a target surface emitted by the optical output unit according to the embodiment of the present invention. Here, the contents of the optical output unit may refer to all or some of the contents of the optical output unit described in FIGS. 1 to 3. Overlapping descriptions of the contents that are the same as those described with reference to FIGS. 1 to 3 will be omitted.

Referring to FIG. 4, the optical output unit 400 includes a light source 410, a collimation lens 420, and a beam splitter 430.

Here, the light source 410 generates light. Light generated by the light source 410 may be infrared rays having a wavelength ranging from 770 to 3000 nm. For example, the light source 410 may use an LED and have a form in which a plurality of LEDs are arranged in a regular pattern. In addition, the light source 410 may include an OLED or an LD. Alternatively, the light source 410 may be an edge emitting laser (EEL). Alternatively, the light source 410 may be a VCSEL. The VCSEL is one of laser diodes for converting an electric signal into an optical signal and may output a wavelength ranging from about 800 to 1000 nm, for example, a wavelength of about 850 nm or about 940 nm.

Here, the light source 410 may output a point-light pattern. For example, when the light source 410 is a VCSEL, the light source 410 may easily control a spot size, position, density, and light quantity in the point-light pattern. The point-light pattern is a spot array shape spaced a predetermined distance from each other in a predetermined area and may be used interchangeably with a spot-light pattern, a point light source pattern, or the like. Here, the point-light pattern may be a pattern in which light is locally concentrated on a space, that is, a pattern in which light is not continuously spread on a space but locally concentrated. In the case of the point-light pattern, since light is locally concentrated, the light quantity of each spot is high. Therefore, there is an advantage that a depth map with high precision may be acquired even when the distance to the object is far.

The collimation lens 420 is disposed on the light source 410 and aligns the light output after being generated by the light source 410. The collimation lens 420 may be disposed on the path of the light output by the light source 410 and may be a portion of the lens assembly 110 of the optical output unit 10 described in FIGS. 1 to 3.

The beam splitter 430 splits the light output by the light source 410 and then aligned by the collimation lens 420 into a first polarization component and a second polarization component. Here, one of the first polarization component and the second polarization component may be P-polarized and the other may be S-polarized. The beam splitter 430 may split the light into the P-polarized and the S-polarized using a birefringent crystal. The P-polarized and the S-polarized may be linear polarization perpendicular to each other.

According to an embodiment of the present invention, the first polarization component and the second polarization component split by the beam splitter 430 are emitted to be distinguished from each other on the object, that is, the target surface.

To this end, the optical output unit 400 may further include a mirror 440.

At least one of optical paths of the first polarization component and the second polarization component split by the beam splitter 430 may be reflected by the mirror 440 and then emitted toward the object, that is, the target surface. Although FIG. 4 shows a case in which after the light is split into the first polarization component and the second polarization component by the beam splitter 430, one of the first polarization component and the second polarization component travels to the object and the other is reflected by the mirror and then travels to the object, the present invention is not limited thereto. The number and positions of mirrors may be modified in various ways depending on the positions of the light source 410 and the beam splitter 430 or the like.

Referring to FIG. 5, the first polarization component (e.g., P-polarized) and the second polarization component (e.g., S-polarized) may be simultaneously emitted on the object. That is, the first polarization component may be emitted on the object in the form of a first spot array, and the second polarization component may be emitted on the object in the form of a second spot array. The first spot array for the first polarization component (e.g., P-polarized) of FIG. 5A and the second spot array for the second polarization component (e.g., S-polarized) of FIG. 5B may be emitted on the object to be distinguished from each other as shown in FIG. 5C. That is, the first polarization component and the second polarization component may be simultaneously emitted on the object as shown in FIG. 5C. Here, "simultaneously emitted" may mean that the first polarization component and the second polarization component reach the object at the same time. Alternatively, "simultaneously emitted" may mean that at least a portion of the time period in which the first polarization component and the second polarization component are emitted on the object overlaps. For example, the first polarization component may reach the object faster than the second polarization component and the second polarization component may reach the object while the first polarization component is emitted on the object, or the second polarization component may reach the object faster than the first polarization component and the second polarization component may reach the object while the first polarization component is emitted on the object. Referring to FIG. 5C, the first spot array for the first polarization component and the second spot array for the second polarization component may be aligned on the same target surface at a predetermined interval. That is, the first spot array for the first polarization component may be disposed to be spaced apart from the second spot array between the first spot array for the first polarization component and the second spot array for the second polarization component. In addition, the second spot array for the second polarization component may be disposed to be spaced apart from the first spot array between the second spot array for the second polarization component and the first spot array for the first polarization component. Therefore, it is possible to maximize the number of spots per unit area, that is, the density of spots, thereby increasing the resolution of depth map extraction. In addition, referring to FIG. 5C, since boundaries between the first spot array for the first polarization component and the second spot array for the second polarization component are clearly distinguished from each other, it is possible to minimize interference between different polarization components, thereby increasing the precision of depth map extraction.

According to an embodiment of the present invention, the first spot array for the first polarization component and the second spot array for the second polarization component may be aligned using the mirror 440. That is, the optical output unit 400 may be aligned in advance so that the first spot array for the first polarization component and the second spot array for the second polarization component are spaced a predetermined distance from each other using the mirror 440. That is, the optical output unit 400 may be calibrated or aligned in advance so that the first spot array for the first polarization component does not overlap but is close to the second spot array for the second polarization component using the mirror 440.

FIG. 6 shows the optical output unit included in the camera apparatus according to the embodiment of the present invention. Overlapping descriptions of the contents that are the same as those described with reference to FIGS. 1 to 5 will be omitted.

Referring to FIG. 6, the optical output unit 400 includes the light source 410, the collimation lens 420, the beam splitter 430, the mirror 440, a first optical element 450, and a second optical element 460.

Since descriptions of the light source 410, the collimation lens 420, the beam splitter 430, and the mirror 440 are the same as those described in FIGS. 4 and 5, overlapping descriptions will be omitted for convenience of description.

According to an embodiment of the present invention, the first optical element 450 is disposed on a path on which the first polarization component split by the beam splitter 430 is emitted to diffuse the first polarization component. In addition, the second optical element 460 is disposed on a path on which the second polarization component split by the beam splitter 430 is emitted to diffuse the second polarization component. For example, the first optical element 450 may be a diffractive optical element (DOE) for radiating and outputting the spot array of the first polarization component n times, and the second optical element 460 may be a DOE for radiating and outputting the spot array of the second polarization component n times.

The first optical element 450 and the second optical element 460 are shown as being separate components separated from each other, but are not limited thereto. That is, one optical element may be disposed on the path on which the first polarization component is emitted and the path on which the second polarization component is emitted and may diffuse the first polarization component and the second polarization component simultaneously.

When the camera apparatus according to the embodiment of the present invention further includes the first optical element 450 and the second optical element 460, it is possible to increase the density of the spot emitted on the object without increasing the power consumption of the light source, thereby increasing the resolution of depth map extraction.

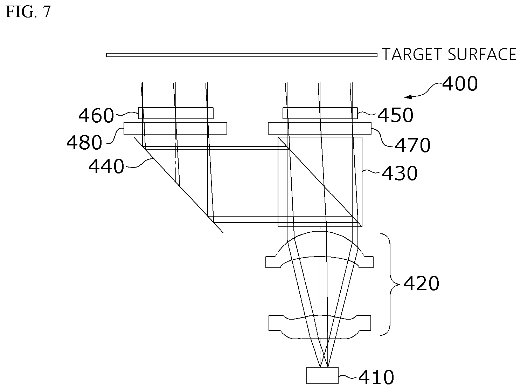

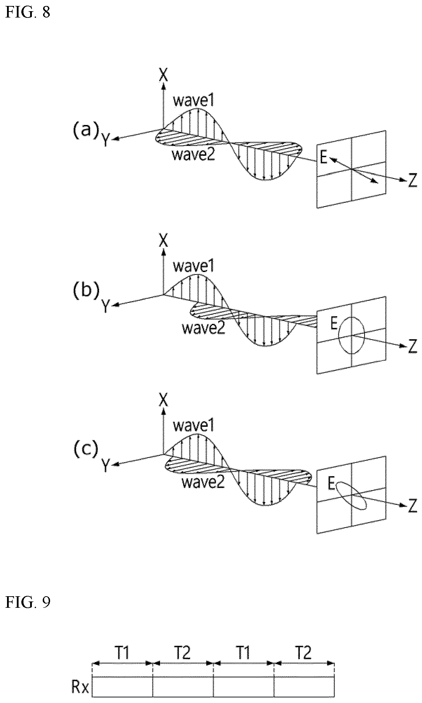

FIG. 7 shows the optical output unit included in the camera apparatus according to the embodiment of the present invention, and FIG. 8 shows the principle of a phase retardation member according to the embodiment of the present invention. Overlapping descriptions of the contents that are the same as those described with reference to FIGS. 1 to 6 will be omitted.

Referring to FIG. 7, the optical output unit 400 includes the light source 410, the collimation lens 420, the beam splitter 430, the mirror 440, the first optical element 450, the second optical element 460, a first phase retardation member 470, and a second phase retardation member 480.

Since descriptions of the light source 410, the collimation lens 420, the beam splitter 430, the mirror 440, the first optical element 450, and the second optical element 460 are the same as those described in FIGS. 4 to 6, overlapping descriptions will be omitted for convenience of description.

According to an embodiment of the present invention, the first phase retardation member 470 may phase-retards the first polarization component, the second phase retardation member 480 phase-retards the second polarization component, and the first polarization component phase-retarded by the first phase delay member 470 and the second polarization component phase-retarded by the second phase delay member 480 may be emitted to be distinguished from each other on an object. The first phase retardation member 470 and the second phase retardation member 480 are shown as being disposed between the beam splitter 430 and the first optical element 450 and between the beam splitter 430 the second optical element 460, respectively, but are not limited thereto.

Depending on a surface material of the object, a polarization direction of the light reflected from the object may differ from a polarization direction of the light incident on the object. Therefore, the light of the first polarization component may have some characteristics of the second polarization component after being reflected from the object, and the light of the second polarization component may have some characteristics of the first polarization component after being reflected from the object. Therefore, the reliability of the input light signal reflected from the object and then input to the optical input unit can be lowered. According to an embodiment of the present invention, the first polarization signal and the second polarization signal are phase-retarded by the first phase retardation member 470 and the second phase retardation member 480, respectively, to more clearly distinguish between the first polarization signal and the second polarization signal.

The polarization of light is the sum of vector directions of an electric field and a magnetic field, and a phase difference, that is, the vector directions, of the electric and magnetic fields may be changed by phase retardation, thereby changing the characteristics of the polarization. Referring to FIG. 8A, when Ex and Ey orthogonal to each other propagate in the same direction and have the same phase, the Ex and Ey are linearly polarized, referring to FIG. 8B, when the Ex and Ey orthogonal to each other propagate in the same direction and have a phase difference of 90 degrees, the Ex and Ey are circularly polarized, and referring to FIG. 8C, when the Ex and Ey orthogonal to each other propagate in the same direction and have a random phase difference, the Ex and Ey are elliptically polarized.

For example, when light passing through an X-direction vertical polarization filter (hereinafter referred to as X-polarized) passes through a 1/4 phase retardation element with a phase difference of 90 degrees, the light is circularly polarized clockwise, and when the light circularly polarized clockwise re-passes through the 1/4 phase retardation element, the above light is Y-polarized. Meanwhile, when the Y-polarized light passes through the 1/4 phase retardation member, the Y-polarized light is circularly polarized counterclockwise, and when the light circularly polarized counterclockwise re-passes through the 1/4 phase retardation member, the above light is X-polarized.

Using such a principle, according to an embodiment of the present invention, when one of the first polarization component and the second polarization component is P-polarized and the other is S-polarized, the first polarization component may be circularly polarized in a first direction by the first phase retardation member 470, and the second polarization component may be circularly polarized in a second direction differing from the first direction by the second phase retardation member 480. The first direction may be clockwise, and the second direction may be counterclockwise. For example, the first polarization component may be circularly polarized clockwise, and the second polarization component perpendicular to the first polarization component may be circularly polarized counterclockwise.

In this way, when the first polarization component is reflected from the object after being circularly polarized in the first direction and the second polarization component is reflected from the object after being circularly polarized in the second direction, it is possible to reduce interference between the first polarization component and the second polarization component after reflection, thereby enhancing the reliability of depth map extraction.

To this end, the first phase retardation member 470 and the second phase retardation member 480 may each be a 1/4 phase retardation plate and may phase-retard the first polarization component and the second polarization component at 90 degrees. When the first phase retardation member 470 and the second phase retardation member 480 are each the 1/4 phase retardation plate, the first polarization component incident on the first phase retardation member 470 may be circularly polarized in the first direction, for example, clockwise, and the second polarization component incident on the second phase retardation member 480 and perpendicular to the first polarization component may be circularly polarized in the second direction, for example, counterclockwise.

FIG. 9 describes an operation of an optical input unit of the camera apparatus according to the embodiment of the present invention.

Referring to FIG. 9, the optical input unit 20 may receive the first polarization component input after being reflected from the object during a first time period T1 and receive the second polarization component input after being reflected from the object during a second time period T2 that does not overlap the first time period T1. The depth map generation unit 30 may generate depth map of the object in combination of the first polarization component and the second polarization component. That is, the depth map generation unit 30 may receive different polarization components during different time areas and classify the polarization components into different components. In addition, by generating the depth map of the object in combination of the first polarization component and the second polarization component received during different time areas, it is possible to increase the precision of depth map extraction.

Here, the unit of the first time period T1 and the second time period T2 may be a frame. For example, the optical input unit 20 may receive the first polarization component in odd frames and the second polarization component in even frames. To this end, the optical input unit 20 may include a first polarization filter (not shown) for selectively passing the first polarization component and a second polarization filter (not shown) for selectively passing the second polarization component, and the first polarization filter and the second polarization filter may be sequentially driven in synchronization with the first time period T1 and the second time period T2. Therefore, since the optical input unit may separately receive the first polarization component and the second polarization component, it is possible to reduce interference between the first polarization component and the second polarization component in the optical input unit and increase the precision of depth map extraction.

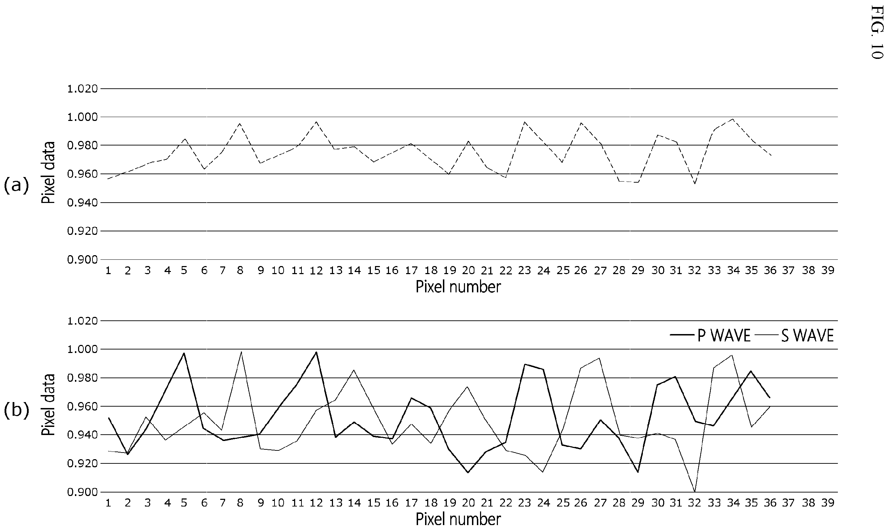

FIG. 10 is a graph for describing an effect according to the embodiment of the present invention.

FIG. 10A is a graph obtained by simulating pixel data according to the number of pixels in a comparative example in which an output light signal is output without being divided into a first polarization component and a second polarization component. FIG. 10B is a graph obtained by simulating pixel data according to the number of pixels in an embodiment of the present invention in which an output light signal is output by being divided into a first polarization component and a second polarization component. Here, the number of pixels may mean a position of a spot, and the pixel data may mean the brightness of the spot.

Referring to FIG. 10A, since a difference between peaks and valleys of the pixel data is not great, interference between neighboring spots may occur, thereby reducing the precision of depth map extraction.

In contrast, referring to FIG. 10B, it can be seen that the peaks and valleys of the pixel data of the first polarization component are distinctly distinguished and the peaks and valleys of the pixel data of the second polarization component are distinctly distinguished. Therefore, since the distinction between spots in the spot array becomes clear, it is possible to minimize interference between spots and increase the precision of depth map extraction.

Although the camera apparatus extracting depth map using the TOF method has been mainly described above, the embodiment of the present invention is not limited thereto. The camera apparatus according to the embodiment of the present invention may be a camera apparatus extracting depth map using the structured light method.

According to the structured light method, a distance is calculated by radiating IR structured light of a predetermined pattern that differs from the surrounding light on the object and receiving the light signal reflected from the object to analyze distortion. The method of projecting the IR structured light onto the object has relatively high accuracy at a short distance compared to other methods, but accuracy decreases significantly as the distance increases, so there is a limitation that a travelable distance is short.

Referring back to FIGS. 1 and 2, the optical output unit 10 generates and then emits the output light signal on the object. Hereinafter, for convenience of description, overlapping descriptions of the contents that are the same as those described in FIGS. 1 and 2 will be omitted.

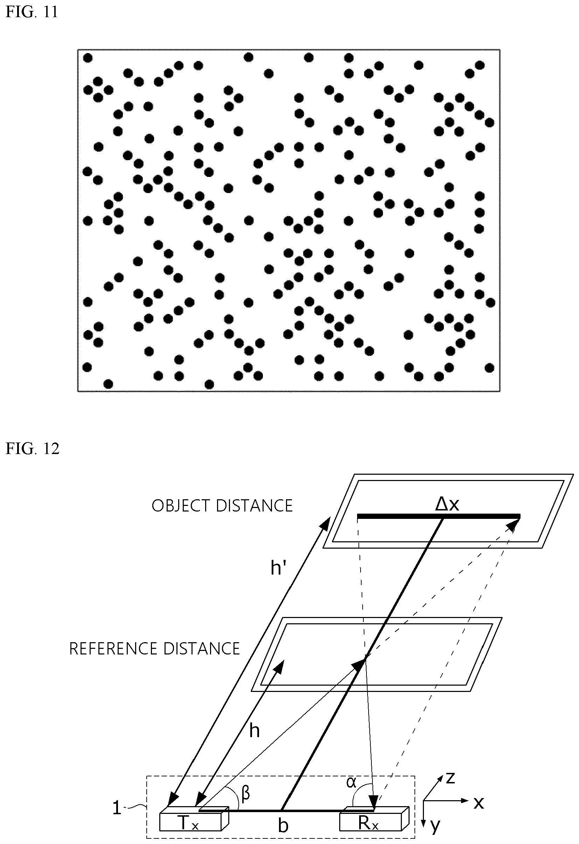

In this case, the optical output unit 10 may output a light signal having a predetermined pattern. FIG. 11 is an example of a light signal having a predetermined pattern. Referring to FIG. 11, the light signal having the predetermined pattern may be formed of a plurality of points and may be referred to as structured light. Here, the predetermined pattern may be a unique pattern and may be generated by a pre-designed algorithm. The light signal having the predetermined pattern may be an IR light signal. As described above, the optical output unit 10 may include the light source 100 and the lens assembly 110. When the light source 100 includes a VCSEL, one VCSEL may have a plurality of emitters, for example, hundreds of emitters, and output a pattern formed of points by each emitter. That is, the structured light having the predetermined pattern may be output by hundreds of emitters. The light source 100 may repeat flashing (on/off) at regular time intervals, and the regular time interval may be the frequency of the output light signal.

The image sensor 140 may receive an input light signal according to a flashing cycle of the light source 100. The image sensor 140 may have a structure in which a plurality of pixels are arranged in the form of a grid. The image sensor 140 may be a CMOS image sensor or a CCD image sensor.

The optical input unit 20 may be disposed parallel to the optical output unit 10. The optical input unit 20 may be disposed next to the optical output unit 10. The optical input unit 20 may be disposed in the same direction as the optical output unit 10.

The depth map generation unit 30 may generate depth map of the object using the input light signal input to the optical input unit 20. According to an embodiment of the present invention, the depth map generation unit 30 may generate depth map of an object using the disparity of the light signal.

FIG. 12 is a view for describing the principle of generating depth map using structured light. As described above, in the present specification, the structured light is the light signal having the predetermined pattern formed of the plurality of points. Referring to FIG. 12, a distance (object distance, h') between the camera apparatus 1 and the object may vary depending on disparity $\Delta x$ of the points forming the structured light. That is, according to the structured light method, the depth map may be extracted depending on the degree of disparity caused by a change in distance. Therefore, the accuracy of the disparity may affect the accuracy of the depth map.

More specifically, the extraction of depth map using structured light may follow the following equations.

[Equation 3]

$$b : \Delta x = h : (h' - h)$$

[Equation 4]

$$\Delta x = \frac{b}{h}(h' - h)$$

[Equation 5]

$$h' = h\left(\frac{\Delta x}{b} + 1\right)$$

Here, h denotes a reference distance, h' denotes the object distance, b denotes a length of a baseline, and $\Delta x$ denotes disparity.

Referring to Equations 3 to 5, it can be seen that the length b of the baseline affects the disparity, and the smaller a field of view (FOV) and the greater the baseline, the greater the disparity per unit length of the object distance h'. When the size of the object is smaller than half that of the baseline, points in the predetermined pattern may overtake an adjacent point due to disparity, and the disparity may decrease as the object distance increases. Therefore, to accurately calculate a depth map, it is necessary to extract disparity based on the center of the points.

The performance of depth map extraction according to the structured light method may vary depending on the measurement accuracy level of the center of the points and the measurement resolution of the disparity.

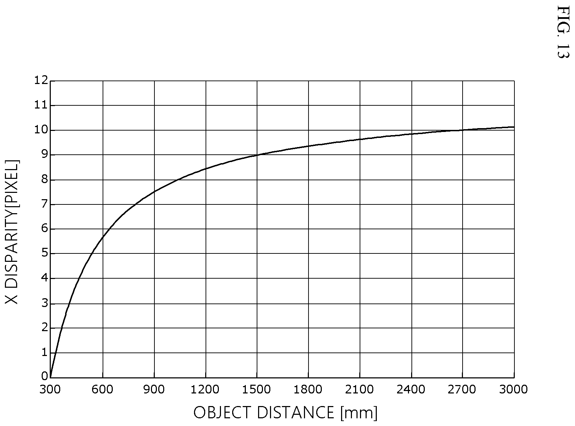

FIG. 13 is a graph for describing a change in disparity according to a distance difference between a reference distance and an object. Here, the reference distance is set to be 300 nm as an example.

Referring to FIG. 13, it can be seen that a rate of change in disparity decreases as the object distance increases. For example, it can be seen that when the object distance is 900 mm or less, the slope of the graph, that is, the change in disparity with respect to the change in distance, is great, but when the object distance exceeds 900 mm, the slope of the graph is significantly smaller. In particular, it can be seen that the slope of the graph is smaller as the object distance increases.

Therefore, it can be seen that the accuracy of disparity measurement decreases as the distance difference between the reference distance and the object increases.

To solve such a problem, the number of pixels of the image sensor may be increased.

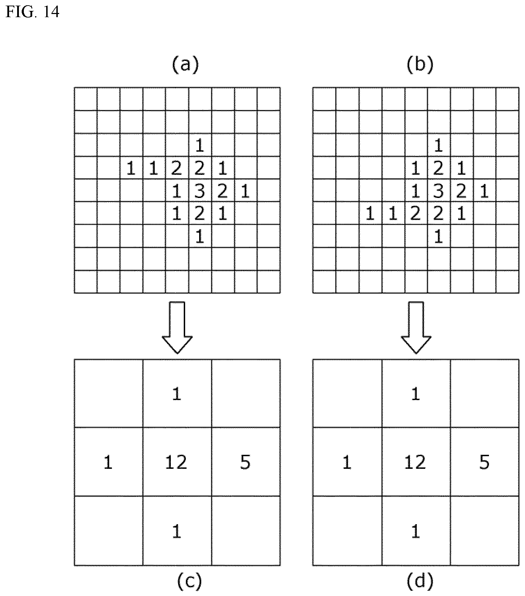

FIG. 14 shows disparity measurement performance according to the number of pixels of an image sensor.

Referring to FIG. 14, FIGS. 14A and 14B show pixel values in an image sensor having the number of pixels of 9*9, and FIGS. 14C and 14D each show results of pixel values using an image sensor having the number of pixels of 3*3 for the same object as FIGS. 14A and 14B.

It can be seen that referring to FIGS. 14A and 14B, when the high-resolution image sensor having the number of pixels of 9*9 is used, the values of FIGS. 14A and 14B are distinguished, but referring to FIGS. 14C and 14D, when the low-resolution image sensor having the number of pixels of 3*3 is used, the values of FIGS. 14C and 14D are not distinguished.

However, when the high-resolution image sensor is used, there is a problem that the total of power consumption and calculations of the camera apparatus increases, and the cost of the camera apparatus significantly increases.

The embodiment of the present invention is intended to increase the measurement accuracy of disparity at a long distance without using the high-resolution image sensor.

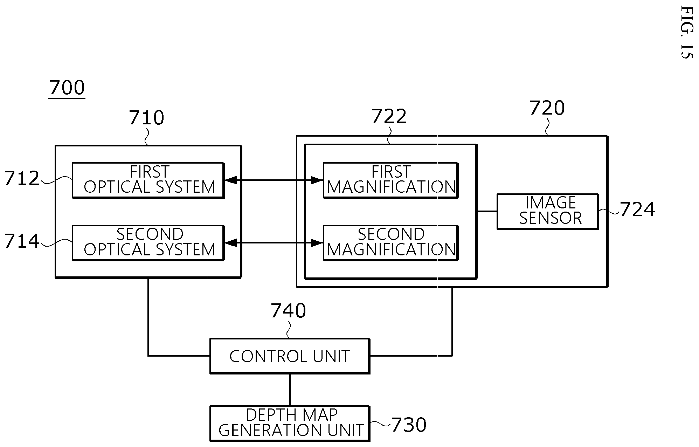

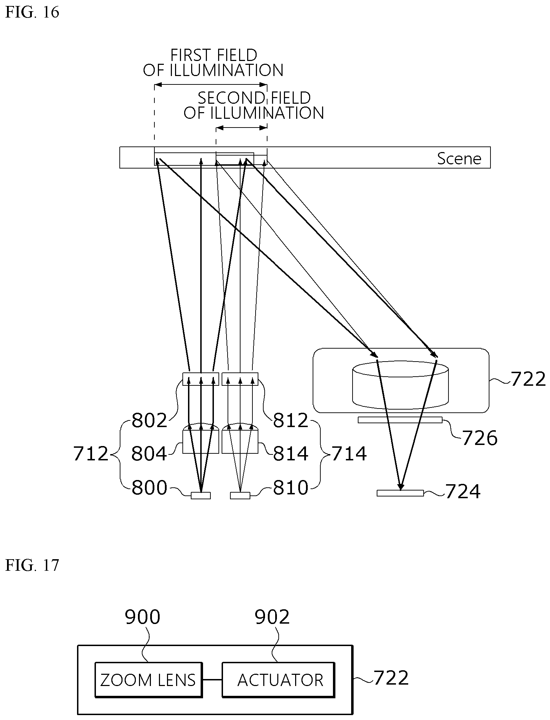

FIG. 15 is a block diagram of the camera apparatus according to the embodiment of the present invention, and FIG. 16 is a conceptual diagram of the camera apparatus according to the embodiment of the present invention.

Referring to FIGS. 15 and 16, a camera apparatus 700 according to the embodiment of the present invention includes an optical output unit 710, an optical input unit 720, a depth map generation unit 730, and a control unit 740. The optical output unit 710, the optical input unit 720, the depth map generation unit 730, and the control unit 740 are components corresponding to the optical output unit 10, the optical input unit 20, the depth map generation unit 30, and the control unit 40 described with reference to FIGS. 1 and 2, respectively, and for convenience of description, overlapping descriptions of the same contents as the camera apparatus 1 described with reference to FIGS. 1 and 2 will be omitted.

The optical output unit 710 generates and then emits an output light signal on an object. In this case, the optical output unit 710 may output a light signal having a predetermined pattern.

According to an embodiment of the present invention, the optical output unit 710 includes a first optical system 712 for emitting a light signal of a first field of illumination (FOI) on an object, and a second optical system 714 for emitting a light signal of a second FOI smaller than the first FOI on the object.

More specifically, as shown in FIG. 16, when the first optical system 712 of the optical output unit 710 is driven, the first optical system 712 emits the light signal of the first FOI, which has a predetermined pattern formed of a plurality of points, on the object. In addition, when the second optical system 714 of the optical output unit 710 is driven, the second optical system 714 emits the light signal of the second FOI smaller than the first FOI, which has a predetermined pattern formed of a plurality of points, on the object.

Therefore, when the first optical system 712 and the second optical system 714 output light signals having the same pattern, a point density of the light signal output through the first optical system 712 for the same distance may be lower than a point density of the light signal output through the second optical system 714. That is, when the first optical system 712 and the second optical system 714 output the light signals having the same pattern, a distance at which the light signal output through the second optical system 714 reaches may be longer than a distance at which the light signal output through the first optical system 712 reaches with respect to the same point density. Here, the point density may be the number of points per unit area.

Therefore, the first optical system 712 that emits the light signal of the first FOI on the object may be used to generate a depth map at a short distance, and the second optical system 714 that emits the light signal of the second FOI smaller than the first FOI on the object may be used to generate a depth map at a longer distance than the distance measured by the first optical system 712. For example, the first optical system 712 may be used to generate a depth map when the object distance is 900 mm or less, and the second optical system 714 may be used to generate a depth map when the object distance exceeds 900 mm.

To this end, the first optical system 712 may include a first light source 800 and a first DOE 802 for diffusing the light output by the first light source 800 to the first FOI, and the second optical system 714 may include a second light source 810 and a second DOE 812 for diffusing the light output by the second light source 810 to the second FOI. In this case, the first light source 800 and the second light source 810 may output light having the same pattern, the light output by the first light source 800 may be radiated n*n times by the first DOE 802 and emitted on the object, and the light output by the second light source 810 may be radiated n*n times by the second DOE 812 and emitted on the object. In this case, n may be an integer of 2 or more. To this end, the first DOE 802 and the second DOE 812 may be designed to have the same shape and designed so that an angle at which light passing through the first DOE 802 spreads out is larger than an angle at which light passing through the second DOE 812 spreads out.

Therefore, the pattern shape of the light signal emitted on the object through the first optical system 712 may be the same as the pattern shape of the light signal emitted on the object through the second optical system 714. When the pattern shape of the light signal emitted on the object through the first optical system 712 is the same as the pattern shape of the light signal emitted on the object through the second optical system 714, the depth map generation unit 730 may apply the same calculation to the light signal input after being emitted on the object through the first optical system 712 and the light signal input after being emitted on the object through the second optical system 714, thereby reducing the calculation complexity of the depth map generation unit 730.

Meanwhile, according to an embodiment of the present invention, the first optical system 712 may further include a first collimator lens 804, and the second optical system 714 may further include a second collimator lens 814. The collimator lens is a lens for focusing light output from a light source.

The first collimator lens 804 may be disposed between the first light source 800 and the first DOE 802 to collect the light output by the first light source 800 to the first DOE 802. The second collimator lens 814 may be disposed between the second light source 810 and the second DOE 812 to collect the light output by the second light source 810 to the second DOE 812.

Here, although it is described that the first optical system 712 includes the first light source 800 and the second optical system 714 includes the second light source 810, the embodiment of the present invention is not limited thereto. Although not shown, the first optical system 712 and the second optical system 714 may include a common light source, and the light output from the light source may be aligned to travel to the first DOE 802 or aligned to travel to the second DOE 812 by the alignment or movement of the first collimator lens 804 and the second collimator lens 814.

The first DOE 802, the first collimator lens 804, the second DOE 812, and the second collimator lens 814 described herein may be a portion of the lens assembly 110 of the optical output unit 10 described with reference to FIGS. 1 and 2.

According to an embodiment of the present invention, the optical input unit 720 includes a zoom optical system 722 and an image sensor 724 that are driven at a first magnification or a second magnification higher than the first magnification. Referring to FIG. 8, an IR bandpass filter 726 for passing IR light may be further disposed between the zoom optical system 722 and the image sensor 724.

FIG. 17 is a block diagram of a zoom optical system according to the embodiment of the present invention. Referring to FIG. 17, the zoom optical system 722 may include a zoom lens 900 and an actuator 902 for driving the zoom lens 900 at the first magnification or the second magnification higher than the first magnification. The zoom lens 900 may include one or more lenses and may be moved by the actuator 902. The zoom lens 900 may include a plurality of lenses, some of the plurality of lenses may be fixed groups, and the others may be moving groups. A gap between the zoom lens 900 and the image sensor 724 is changed by the movement of the zoom lens 900 to adjust the magnification.

For example, the first magnification may be 1x, and the second magnification may be 3x, but the present invention is not limited thereto, and the second magnification may be at least one of 2x, 3x, 4x, 5x, 6x, and 7x. Alternatively, the zoom optical system 722 may be a continuous zoom optical system that may be adjusted to any value from 1x to 7x magnification. Alternatively, the zoom optical system 722 may include a folded lens. Therefore, it is possible to minimize a volume of the zoom optical system 722 in the optical input unit 720.

In this way, when the optical input unit 720 includes the zoom optical system 722, the light signal received by the optical input unit 720 may be magnified. Therefore, since a plurality of points forming the light signal and the distance between the points may be magnified, the position and disparity of the center of the points can be measured more precisely.

According to the embodiment of the present invention, the control unit 740 links the optical output unit 710 with the optical input unit 720.

As described above, the second optical system 714 having a narrower FOI than the first optical system 712 may be applied to generate a depth map at a longer distance than the measurement distance of the first optical system 712. However, as described with reference to FIG. 13, the rate of change in disparity decreases as the object distance increases, and as described with reference to FIG. 14, the number of pixels of the image sensor may be increased to solve such a problem, thereby increasing the power consumption, calculation complexity, and cost of the camera apparatus.

However, according to the embodiment of the present invention, when the control unit 740 links the optical output unit 710 with the optical input unit 720, a camera apparatus capable of generating a precise depth map both at a short distance and a medium distance may be obtained without increasing the number of pixels of the image sensor.

That is, according to the embodiment of the present invention, when the first optical system 712 of the optical output unit 710 is driven, the control unit 740 controls the zoom optical system 722 to be driven at the first magnification, and when the second optical system 714 of the optical output unit 710 is driven, the control unit 740 controls the zoom optical system 722 to be driven at the second magnification higher than the first magnification. For example, when the first light source 800 of the first optical system 712 is turned on, the control unit 740 may control the zoom optical system 722 to be driven at the first magnification, and when the second light source 810 of the second optical system 714 is turned on, the control unit 740 may control the zoom optical system 722 to be driven at the second magnification. In this way, when the zoom optical system 722 is driven at the second magnification when the second optical system 714 is driven, the points of the light signal input to the optical input unit 720 and the distance between the points are enlarged compared to when the optical system 722 is driven at the first magnification, thereby precisely measuring the center and disparity of the points.

According to the embodiment of the present invention, the control unit 740 may control one of the first optical system 712 and the second optical system 714 to be selectively driven. For example, the control unit 740 may control the first optical system 712 to be driven and in conjunction with this, control the zoom optical system 722 to be driven at the first magnification. Alternatively, the control unit 740 may control the second optical system 714 to be driven and in conjunction with this, control the zoom optical system 722 to be driven at the second magnification.

According to the embodiment of the present invention, the first optical system 712 may be set to be driven preferentially by the initial setting, and the control unit 740 may control change driving from the first optical system 712 to the second optical system 714. Alternatively, the second optical system 714 may be set to be driven preferentially by the initial setting, and the control unit 740 may control change driving from the second optical system 714 to the first optical system 712. Here, the control unit 740 may control the change driving by information input through a user interface or information input from an external device. Alternatively, the control unit 740 may control the change driving by the depth map generated by the depth map generation unit 730.

Hereinafter, a method of generating a depth map of a camera apparatus according to one embodiment of the present invention will be described in more detail.

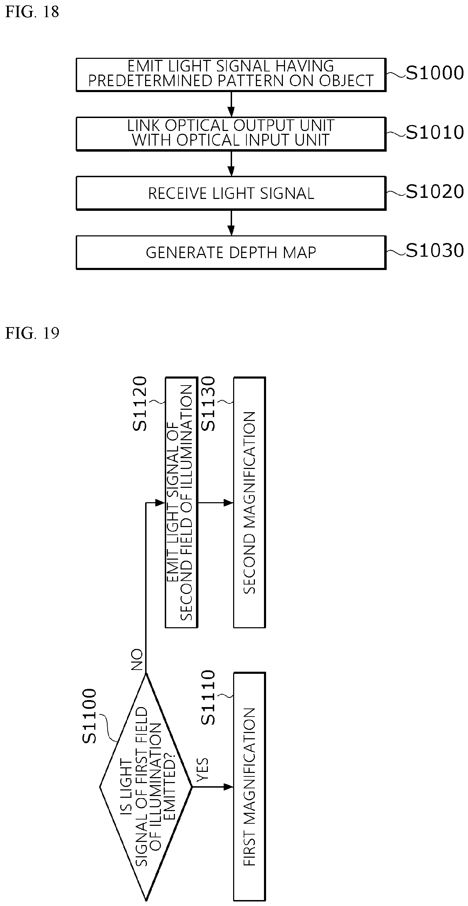

FIG. 18 is a flowchart showing a method of generating a depth map of a camera apparatus according to an embodiment of the present invention, and FIG. 19 is a flowchart showing an operation of linking, by a control unit, an optical output unit and an optical input unit in the method of generating the depth map of FIG. 18.

Referring to FIG. 18, the optical output unit 710 emits the light signal having the predetermined pattern formed of the plurality of points (S1000). Here, the optical output unit 710 emits the light signal of the first FOI to the object or emits the light signal of the second FOI smaller than the first FOI to the object.

Next, the control unit 740 links the optical output unit 710 with the optical input unit 720 (S1010). For example, referring to FIG. 19, when the optical output unit 710 emits the light signal of the first FOI to the object (S1100), the control unit 740 controls the zoom lens of the optical input unit 720 to be driven at the first magnification (S1110). When the optical output unit 710 does not emit the light signal of the first FOI to the object but emits the light signal of the second FOI to the object (S1120), the control unit 740 controls the zoom lens of the optical input unit 720 to be driven at the second magnification higher than the first magnification (S1130).

Next, referring back to FIG. 18, the optical input unit 720 receives the light signal input after being reflected from the object (S1020), and the depth map generation unit 730 generates a depth map of the object using the disparity of the light signal input to the optical input unit 720 (S1030).

Meanwhile, according to an embodiment of the present invention, the control unit 740 may selectively control the optical output unit 710 to emit the light signal of the first FOI to the object or emit the light signal of the second FOI smaller than the first FOI to the object. For example, the control unit 740 may selectively control the optical output unit 710 to emit the light signal of the first FOI to the object or to emit the light signal of the second FOI to the object based on information input through the user interface or information input from an external device. Alternatively, the control unit 740 may selectively control the optical output unit 710 to emit the light signal of the first FOI to the object or to emit the light signal of the second FOI to the object based on the depth map generated by the operation of generating the depth map of the object (S1030).

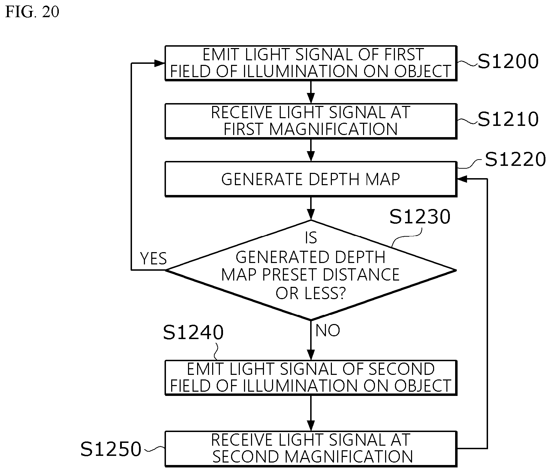

FIG. 20 is a flowchart showing a control method of a camera apparatus according to an embodiment of the present invention.

Referring to FIG. 20, the optical output unit 710 emits the light signal of the first FOI to the object (S1200), the optical input unit 720 receives the light signal at the first magnification (S1210), and the depth map generation unit 730 generates the depth map using the received light signal (S1220).

In this case, when the generated depth map is a preset distance or less (S1230), the control unit 740 may control the optical output unit 710 to emit the light signal of the first FOI to the object (S1200), the optical input unit 720 to receive the light signal at the first magnification (S1210), and the depth map generation unit 730 to generate the depth map using the received light signal (S1220). Here, the preset distance is an object distance and may be, for example, 900 mm.

In contrast, when the generated depth map exceeds the preset distance, the control unit 740 may control the optical output unit 710 to emit the light signal of the second FOI to the object (S1240), the optical input unit 720 to receive the light signal at the second magnification (S1250), and the depth map generation unit 730 to generate the depth map using the received light signal (S1220).

Therefore, when the object is present at a distance of a medium distance or more, for example, more than 900 mm in a state in which the first optical system 712 of the optical output unit 710 is initially set to drive, the FOI of the optical output unit 710 and the magnification of the optical input unit 720 may be adaptively adjusted.

In addition, when the object is present at a short distance, for example, 900 mm or less in a state in which the second optical system 714 of the optical output unit 710 drives, the FOI of the optical output unit 710 and the magnification of the optical input unit 720 may be adaptively adjusted for a short distance.

Therefore, since the automatic switching from a short distance mode to a long distance mode may be performed or the automatic switching from the long distance mode to the short distance mode may be performed without a separate user setting, the depth map for the moving object may be extracted precisely and quickly.

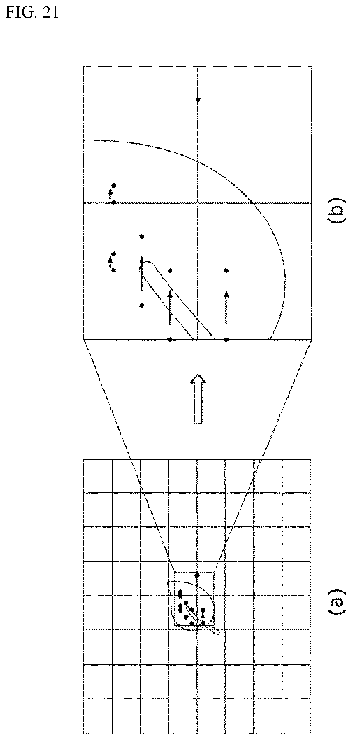

FIG. 21 shows an example of improved disparity measurement performance when an optical input unit includes a zoom lens according to the embodiment of the present invention.

FIG. 21A is an image of an image sensor when an optical input unit does not include a zoom lens, and FIG. 21B is an image of the image sensor when an optical input unit includes a zoom lens according to an embodiment of the present invention.

Referring to FIG. 21A, since some points overlap each other, it can be seen that it is difficult to precisely calculate the center and disparity of the points.

On the other hand, referring to FIG. 21B, when an image is enlarged 5 times using the zoom lens, the center and disparity of the points may be more precisely calculated.

Therefore, according to an embodiment of the present invention, it is possible to solve the problem that the sensitivity of disparity decreases at a longer distance, and a structured light type camera apparatus may be used to generate the depth map both at a short distance and at medium and long distances.

Although the present specification mainly describes an example in which the zoom optical system is driven at the first magnification or the second magnification higher than the first magnification, the present invention is not limited thereto. The zoom optical system may be driven at a magnification of two or more. For example, the zoom optical system may be driven at the first magnification, the second magnification higher than the first magnification, or a third magnification higher than the second magnification. Alternatively, the zoom optical system may be a continuous zoom optical system of which magnification is continuously changed.

The camera apparatus according to the embodiment of the present invention may be a camera apparatus mounted on a vehicle to measure a distance between the vehicle and the object, but is not limited thereto. For example, the camera apparatus according to the embodiment of the present invention may be a light detection and ranging (LiDAR) camera.

Although embodiments have been mainly described above, these are only illustrative and do not limit the present invention, and those skilled in the art to which the present invention pertains can know that various modifications and applications not exemplified above are possible without departing from the essential characteristics of the embodiments. For example, each component specifically illustrated in the embodiments may be implemented by modification. In addition, differences related to these modifications and applications should be construed as being included in the scope of the present invention defined in the appended claims.

[DESCRIPTION OF REFERENCE NUMERALS]

1, 700: camera apparatus
10, 710: optical output unit
20, 720: optical input unit
30, 730: depth map generation unit
40, 740: control unit
100: light source
400: optical output unit
410: light source
420: collimation lens
430: beam splitter
440: mirror
712: first optical system
714: second optical system
722: zoom optical system
724: image sensor
726: IR bandpass filter
800: first light source
802: first diffractive optical element
804: first collimation lens
810: second light source
812: second diffractive optical element
814: second collimation lens

## Claims

1. A camera apparatus comprising:

   an optical output unit configured to generate and emit an output light signal to an object;
   an optical input unit configured to receive an input light signal input after being reflected from the object; and
   a depth map generation unit configured to generate a depth map of the object using the input light signal input to the optical input unit,
   wherein the optical output unit includes:

   a light source configured to generate the output light signal; and
   a beam splitter configured to split the output light signal generated by the light source into a first polarization component and a second polarization component that differ from each other, and
   the first polarization component and the second polarization component are emitted to be distinguished from each other on the object.

2. The camera apparatus of claim 1, wherein the optical output unit includes:

   a first phase retardation member configured to phase-retard the first polarization component; and
   a second phase retardation member configured to phase-retard the second polarization component, and
   the first polarization component phase-retarded by the first phase retardation member and the second polarization component phase-retarded by the second phase retardation member are emitted to be distinguished from each other on the object.

3. The camera apparatus of claim 2, wherein one of the first polarization component and the second polarization component is a P-polarized component and the other is an S-polarized component, and
   the first polarization component is circularly polarized in a first direction by the first phase retardation member, and the second polarization component is circularly polarized in a second direction differing from the first direction by the second phase retardation member.

4. The camera apparatus of claim 1, wherein the first polarization component is emitted on the object in the form of a first spot array, and the second polarization component is emitted on the object in the form of a second spot array, and
   the first spot array is disposed to be spaced apart from the second spot array between the first spot array and the second spot array.

5. The camera apparatus of claim 1, wherein the first polarization component and the second polarization component are simultaneously emitted on the object.

6. The camera apparatus of claim 1, wherein at least one of the first polarization component and the second polarization component split by the beam splitter is reflected by a mirror and then emitted on the object.

7. The camera apparatus of claim 1, further comprising: a first optical element disposed on a path on which the first polarization component is emitted to diffuse the first polarization component, and a second optical element disposed on a path on which the second polarization component is emitted to diffuse the second polarization component, wherein at least one of the first optical element and the second optical element is a diffractive optical element (DOE).

8. The camera apparatus of claim 1, wherein the optical input unit receives the first polarization component input after being reflected from the object during a first time period and receives the second polarization component input after being reflected from the object during a second time period not overlapping the first time period, and the depth map generation unit generates the depth map of the object using the first polarization component and the second polarization component.

9. The camera apparatus of claim 1, wherein the depth map generation unit generates the depth map using at least one of a phase difference or time difference between the output light signal and the input light signal.

10. The camera apparatus of claim 1, wherein the output light signal is structured light having a predetermined pattern, and the depth map generation unit generates the depth map using disparity of the structured light.

FIG. 1

| | |
|---|---|
| OPTICAL OUTPUT UNIT | 10 |
| OPTICAL INPUT UNIT | 20 |
| DEPTH MAP GENERATION UNIT | 30 |
| CONTROL UNIT | 40 |

1

FIG. 2

FIG. 3

(a) light pulses

$t_{modulation}$   $t_{pulse}$

4 phases

(b) phase pulses

8 phases

$t_{phase}$   $t_{exposure}$

(c) frame pulses

$t_{frame}$   $t_{phase\ group(sub-frame\ group)}$

FIG. 4

TARGET SURFACE

400

440   430

420

410

FIG. 5

(a)          (b)          (c)

FIG. 6

TARGET SURFACE

400

460          450

440          430

420

410

FIG. 7

TARGET SURFACE

400

460 450
480 470
440 430

420

410

FIG. 8

FIG. 9

FIG. 10

(a)

(b)

FIG. 11

FIG. 12

OBJECT DISTANCE

Δx

h'

REFERENCE DISTANCE

h

β

α

1

T<sub>x</sub>

b

R<sub>x</sub>

z

x

y

FIG. 13

FIG. 14

(a)

|   |   |   |   |   |   |   |   |   |
|---|---|---|---|---|---|---|---|---|
|   |   |   |   |   |   |   |   |   |
|   |   |   |   |   |   |   |   |   |
|   |   |   |   |   | 1 |   |   |   |
|   | 1 | 1 | 2 | 2 | 1 |   |   |   |
|   |   |   | 1 | 3 | 2 | 1 |   |   |
|   |   |   | 1 | 2 | 1 |   |   |   |
|   |   |   |   | 1 |   |   |   |   |
|   |   |   |   |   |   |   |   |   |
|   |   |   |   |   |   |   |   |   |

(b)

|   |   |   |   |   |   |   |   |   |
|---|---|---|---|---|---|---|---|---|
|   |   |   |   |   |   |   |   |   |
|   |   |   |   |   |   |   |   |   |
|   |   |   |   |   | 1 |   |   |   |
|   |   |   |   | 1 | 2 | 1 |   |   |
|   |   |   |   | 1 | 3 | 2 | 1 |   |
|   |   | 1 | 1 | 2 | 2 | 1 |   |   |
|   |   |   |   |   | 1 |   |   |   |
|   |   |   |   |   |   |   |   |   |
|   |   |   |   |   |   |   |   |   |

(c)

|   | 1 |   |
|---|----|---|
| 1 | 12 | 5 |
|   | 1 |   |

(d)

|   | 1 |   |
|---|----|---|
| 1 | 12 | 5 |
|   | 1 |   |

EP 4 525 436 A1

FIG. 15

27

FIG. 16

FIG. 17

FIG. 18

FIG. 19

FIG. 20

```
┌─────────────────────────────┐
│   EMIT LIGHT SIGNAL OF FIRST │ ⌇ S1200
│ FIELD OF ILLUMINATION ON OBJECT │
└─────────────────────────────┘
              │
              ▼
┌─────────────────────────────┐
│    RECEIVE LIGHT SIGNAL AT   │ ⌇ S1210
│     FIRST MAGNIFICATION      │
└─────────────────────────────┘
              │                     ⌇ S1220
              ▼
┌─────────────────────────────┐
│      GENERATE DEPTH MAP      │◄──┐
└─────────────────────────────┘   │
              │                    │
              ▼       S1230        │
           ╱        IS       ╲     │
   YES    ╱  GENERATED DEPTH  ╲    │
◄────────╱   MAP PRESET DISTANCE  ╲│
         ╲     OR LESS?       ╱    │
          ╲                  ╱     │
           ╲       │        ╱      │
  S1240      ╲     │NO    ╱        │
              ▼                    │
┌─────────────────────────────┐   │
│   EMIT LIGHT SIGNAL OF SECOND│   │
│ FIELD OF ILLUMINATION ON OBJECT │ │
└─────────────────────────────┘   │
              │                    │
              ▼                    │
┌─────────────────────────────┐   │
│    RECEIVE LIGHT SIGNAL AT   │───┘
│     SECOND MAGNIFICATION     │
└─────────────────────────────┘
  S1250
```

FIG. 21

(a)

(b)

## INTERNATIONAL SEARCH REPORT

| International application No. |
| --- |
| **PCT/KR2023/006413** |

### A. CLASSIFICATION OF SUBJECT MATTER

**H04N 13/271**(2018.01)i; **H04N 13/254**(2018.01)i; **H04N 13/236**(2018.01)i; **H04N 13/207**(2018.01)i; **H04N 23/54**(2023.01)i; **H04N 23/55**(2023.01)i; **G02B 27/28**(2006.01)i; **G02B 26/08**(2006.01)i

According to International Patent Classification (IPC) or to both national classification and IPC

### B. FIELDS SEARCHED

Minimum documentation searched (classification system followed by classification symbols)

H04N 13/271(2018.01); G01B 11/22(2006.01); G01B 11/25(2006.01); G02B 26/08(2006.01); G02B 27/28(2006.01); G02B 5/30(2006.01); G06T 7/521(2017.01); H04N 13/00(2006.01); H04N 13/239(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 객체(object), 깊이 정보(depth information), 광원(light source), 빔 스플리터(beam splitter), 편광(polarization)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2020-0036614 A (LG INNOTEK CO., LTD.) 07 April 2020 (2020-04-07) See paragraphs [0003], [0030]-[0035], [0048] and [0059]; claim 1; and figure 1. | 1,5-7,9-10 |
| A | | 2-4,8 |
| Y | KR 10-2012-0120496 A (ELBIT SYSTEMS OF AMERICA, LLC) 01 November 2012 (2012-11-01) See paragraphs [0010], [0014] and [0016]; and figure 1. | 1,5-7,9-10 |
| A | KR 10-2020-0038227 A (LG INNOTEK CO., LTD.) 10 April 2020 (2020-04-10) See paragraphs [0030]-[0035]; and figures 1-4. | 1-10 |
| A | KR 10-2158026 B1 (LG INNOTEK CO., LTD.) 21 September 2020 (2020-09-21) See paragraphs [0034]-[0059]; and figures 1-2. | 1-10 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 July 2023** | **01 August 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/006413**

### C.    DOCUMENTS CONSIDERED TO BE RELEVANT

| Category* | Citation of document, with indication, where appropriate, of the relevant passages | Relevant to claim No. |
|---|---|---|
| A | US 2021-0183085 A1 (ARIZONA BOARD OF REGENTS ON BEHALF OF THE UNIVERSITY OF ARIZONA) 17 June 2021 (2021-06-17)<br>    See paragraphs [0032]-[0036]; and figure 6. | 1-10 |

Form PCT/ISA/210 (second sheet) (July 2022)

| | INTERNATIONAL SEARCH REPORT | International application No. |
|---|---|---|
| | Information on patent family members | PCT/KR2023/006413 |

| Patent document cited in search report | | | Publication date (day/month/year) | Patent family member(s) | | | Publication date (day/month/year) |
|---|---|---|---|---|---|---|---|
| KR | 10-2020-0036614 | A | 07 April 2020 | US | 2022-0003873 | A1 | 06 January 2022 |
| | | | | WO | 2020-067738 | A1 | 02 April 2020 |
| KR | 10-2012-0120496 | A | 01 November 2012 | EP | 2521936 | A2 | 14 November 2012 |
| | | | | EP | 3441813 | A2 | 13 February 2019 |
| | | | | EP | 3441813 | A3 | 03 July 2019 |
| | | | | JP | 2013-516649 | A | 13 May 2013 |
| | | | | US | 2011-0164221 | A1 | 07 July 2011 |
| | | | | US | 8905547 | B2 | 09 December 2014 |
| | | | | WO | 2011-082320 | A2 | 07 July 2011 |
| | | | | WO | 2011-082320 | A3 | 29 September 2011 |
| KR | 10-2020-0038227 | A | 10 April 2020 | KR | 10-2099935 | B1 | 15 May 2020 |
| KR | 10-2158026 | B1 | 21 September 2020 | WO | 2015-115770 | A1 | 06 August 2015 |
| US | 2021-0183085 | A1 | 17 June 2021 | US | 11605172 | B2 | 14 March 2023 |
| | | | | WO | 2019-113445 | A2 | 13 June 2019 |
| | | | | WO | 2019-113445 | A3 | 26 March 2020 |

Form PCT/ISA/210 (patent family annex) (July 2022)